# EUROPEAN PATENT SPECIFICATION

(11) **EP 3 040 212 B1**
(45) Date of publication and mention of the grant of the patent: **18.10.2017**
(21) Application number: 15200255.6
(22) Date of filing: 15.12.2015
(51) Int. Cl.: B60C 1/00, C08L 21/00

(54) **PNEUMATIC TIRE**
LUFTREIFEN
PNEUMATIQUE

(30) Priority: 16.12.2014 US 201414571551
(43) Date of publication of application: 06.07.2016
(73) Proprietor: The Goodyear Tire & Rubber Company, Akron, Ohio 44316 (US)
(72) Inventor: POORTERS, Laurent Albert Robert, 9137 Schieren (LU); KANZ, Carlo, 8249 Mamer (LU); DELVILLE, Jerome Joel Daniel, 54430 Rehon (FR); FRANK, Uwe Ernst, 54329 Konz (DE); WEYDERT, Marc, 8064 Bertrange (LU)
(74) Representative: Kutsch, Bernd

(56) References cited:
- EP-A2- 1 876 203
- JP-B2- 5 367 009
- US-A1- 2010 024 947

## Description

### Background of the Invention

A conventional radial-ply automobile tire includes one or more radial plies that are wrapped around two annular inextensible beads. The portions of the plies that extend beyond the beads are turned up around the beads, forming "turn-ups." An annular rubber filler bounded by the turned up ply and the bead is called an "apex."

The choice of dimensions and material properties of the apex affects the performance of the tire, such as tire weight, sidewall stiffness, handling, ride comfort, flexural heat, material fatigue, and tire life. For example, since the apex extends up part of the length of the sidewall, increasing the stiffness of the apex increases the stiffness of the sidewall, yielding less sidewall flexing and hence less flexural heat and material fatigue, but at the cost of a rougher ride. In addition, the properties of the ply in contact with apex can also affect these aspects of tire performance.

### Summary of the Invention

The invention relates to a tire in accordance with claim 1 and to a method in accordance with claim 9.

Dependent claims refer to preferred embodiments of the invention.

In one aspect, the present invention is directed to a pneumatic tire having a circumferentially extending equatorial plane of the tire, the tire comprising a carcass, a tread radially outward of the carcass, the carcass comprising a carcass reinforcing ply, opposing bead portions, and opposing sidewalls, the carcass reinforcing ply having a main portion extending between the opposing bead portions and a pair of turnup portions, each turnup portion extending from one end of the main portion, the carcass ply further comprising reinforcing cords and a plycoat; each bead portion having a bead core and a bead apex, each apex being in contact with the plycoat;
the plycoat comprising a vulcanizable plycoat rubber composition comprising a first methylene acceptor;
the apex comprising a vulcanizable apex rubber composition comprising a second methylene acceptor and a methylene donor, wherein the amount of methylene donor is in stoichiometric excess relative to the second methylene acceptor.

### Brief Description of the Drawings

FIG. 1A shows a meridional cross-section of a radial ply pneumatic tire according to the present invention; and
FIG. 1B shows a cross-section of the bead section of FIG. 1A.
FIG. 2 shows a graph of hardness measured across the interface of an apex-plycoat sample according to the invention.

### Description of Example Embodiments of the Invention

"Bead" means an annular tensile member that is associated with holding the tire to the rim. The beads are wrapped by ply cords and shaped, with or without other reinforcement elements such as flippers, chippers, apexes or fillers, toe guards and chafers.

"Meridional" refers to a laterally disposed curved line that lies in a plane that includes the axis of the tire.

"Ply" means a cord-reinforced layer of rubber-coated radially deployed or otherwise parallel cords.

"Radial" and "radially" mean in a direction perpendicular to the axis of rotation of the tire.

"Radial ply tire" means a belted or circumferentially restricted pneumatic tire in which at least one ply has cords which extend from bead to bead.

"Sidewall" is the portion of a tire between the tread and the bead.

There is disclosed a pneumatic tire having a circumferentially extending equatorial plane of the tire, the tire comprising a carcass, a tread radially outward of the carcass, the carcass comprising a carcass reinforcing ply, opposing bead portions, and opposing sidewalls, the carcass reinforcing ply having a main portion extending between the opposing bead portions and a pair of turnup portions, each turnup portion extending from one end of the main portion, the carcass ply further comprising reinforcing cords and a plycoat; each bead portion having a bead core and a bead apex, each apex being in contact with the plycoat;
the plycoat comprising a vulcanizable plycoat rubber composition comprising a first methylene acceptor;
the apex comprising a vulcanizable apex rubber composition comprising a second methylene acceptor and a methylene donor, wherein the amount of methylene donor is in stoichiometric excess relative to the second methylene acceptor.

There is further disclosed a method of making the tire.

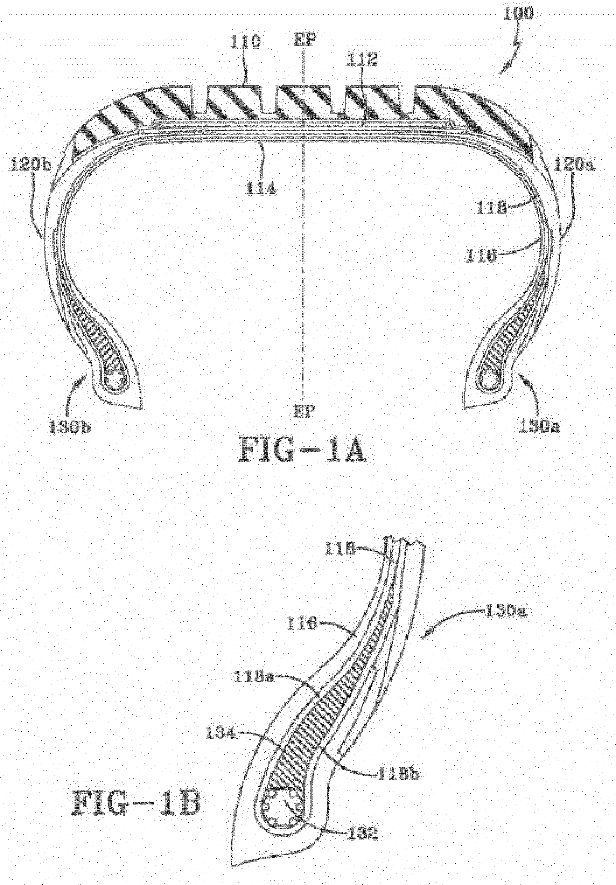

FIG. 1A shows a meridional cross-section of a radial ply pneumatic tire 100 about equatorial plane EP according to the present invention, comprising a tread 110, a belt structure ("belts") 112 comprising one or more belts, and a carcass 114. The carcass 114 has an innerliner 116, at least one radial ply 118, two sidewalls 120A, 120B, and two preferably identical bead sections 130A, 130B.

FIG. 1B shows a cross-section of the bead section 130A of FIG. 1A. It should be understood that the cross-section of the bead section 130B (not shown) is preferably the same as that of the bead section 130A. The bead section 130A includes a bead 132. The ply 118 is wrapped around the bead, forming a ply axially-inner section 118A and a ply turnup 118B. Apex 134 is surrounded by the bead 132, the ply inner section 118A and the ply turnup 118B. Ply 118 includes reinforcing cords and a rubber plycoat composition (not shown).

The rubber compositions of the apex and plycoat include an in-situ resin that is the reaction product of a methylene acceptor and a methylene donor.

The apex includes a stoichiometric excess of methylene donor with respect to the methylene acceptor in the apex.

The plycoat includes a methylene acceptor and may include a methylene donor in an amount sufficient to maintain the desired flexibility of the ply.

The excess methylene donor in the apex is thought to migrate from the apex rubber composition to the plycoat rubber composition in contact with the apex, to enable the plycoat in contact with the apex to obtain a higher stiffness and hardness. At the same time, the plycoat not in contact with the apex will have the stiffness and hardness properties desirable for other sections of the tire, such as the sidewall and crown areas.

In-situ resins are formed in the rubber stock and involve the reaction of a methylene acceptor and a methylene donor. The term "methylene donor" is intended to mean a chemical capable of reacting with a methylene acceptor and generate the resin in-situ. Examples of methylene donors which are suitable for use in the present invention include hexamethylenetetramine and N-substituted oxymethylmelamines, of the general formula: 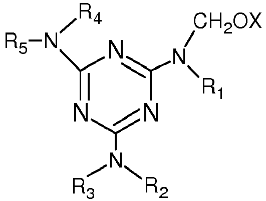 wherein X is hydrogen or an alkyl having from 1 to 8 carbon atoms, R₁, R₂, R₃, R₄ and R₅ are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine. The N-methylol derivatives of melamine are prepared by known methods.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof. Examples of methylene acceptors include those disclosed in US-B-6,605,670; US-B-6,541,551; US-B-6,472,457; US-A-5,945,500; US-A-5,936,056; US-A-5,688,871; US-A-5,665,799; US-A-5,504,127; US-A-5,405,897; US-A-5,244,725; US-A-5,206,289; US-A-5,194,513; US-A-5,030,692; US-A-4,889,481; US-A-4,605,696; US-A-4,436,853; and US-A-4,092,455. Examples of modified phenol novolak resins include cashew nut oil modified phenol novolak resin, tall oil modified phenol novolak resin and alkyl modified phenol novolak resin.

Other examples of methylene acceptors include activated phenols by ring substitution and a cashew nut oil modified novalak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The vulcanizable rubber composition used to make the apex includes a methylene acceptor and a methylene donor, where the methylene donor is in stoichiometric excess relative to the methylene acceptor of the apex. In one embodiment the amount of methylene acceptor in the apex ranges from 15 to 45 phr. In one embodiment, the amount of methylene donor in the apex ranges from 5 to 15 phr.

The vulcanizable rubber composition used to make the plycoat includes a methylene acceptor. In one embodiment the amount of methylene acceptor in the apex ranges from 0.5 to 10 phr. The vulcanizable rubber composition used to make the plycoat may include a methylene donor in an amount ranging from 0.5 to 4 phr.

The methylene acceptor used in the apex and plycoat may be the same compounds, or different compounds. Likewise, the methylene donor in the apex and the methylene donor in the plycoat, if used, may be the same or different compounds.

The vulcanizable rubber compositions of the apex and plycoat include at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105ºC. Suitable polybutadiene rubbers are available commercially, such as Budene® 1207 from Goodyear and the like.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. Tg is determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 120 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B-6,242,534; US-B-6,207,757; US-B-6,133,364; US-B-6,372,857; US-A-5,395,891; or US-B-6,127,488, and plasticized starch composite filler including that disclosed in US-A-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z I

in which Z is selected from the group consisting of 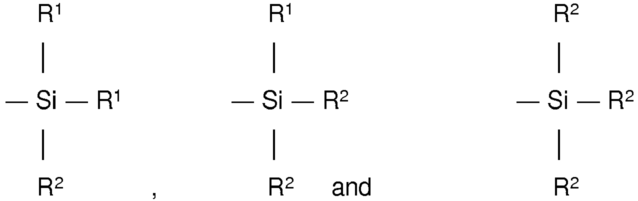 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 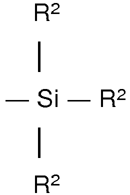 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example

In this example, the effect of increasing the amount of methylene donor in the apex layer of an apex/plycoat composite laminate is illustrated. Rubber compounds were mixed with components as given in Table 1, with all amounts in phr. Standard amounts of additives were used in the compounds, including oils, zinc oxide, stearic acid, sulfur, and accelerators.

Three two-layer apex/plycoat composite samples were prepared. Sample 1 included the plycoat layer with a control apex compound layer. Sample 2 included the plycoat layer with an apex compound layer with increased hexamethoxymethylmelamine (HMMM) as compared with Sample 1. Sample 3 included the plycoat layer with an apex compound layer with added hexamethylene tetramine as compared with Sample 1.

**Table 1**

| Sample No. | 1,2,3 | 1 | 2 | 3 |
|---|---|---|---|---|
| Layer Type | Plycoat | Apex | Apex | Apex |
| Elastomers | 100 | 100 | 100 | 100 |
| Carbon black | 52.5 | 75 | 75 | 75 |
| Phenol-formaldehyde resin | 1 | 20 | 20 | 20 |
| Octyl phenol-formadehyde resin | 3 | 3 | 3 | 3 |
| Hexamethoxymethylmelamine | 1 | 0 | 0 | 4 |
| Hexamethylene tetramine | 0 | 3 | 8 | 3 |

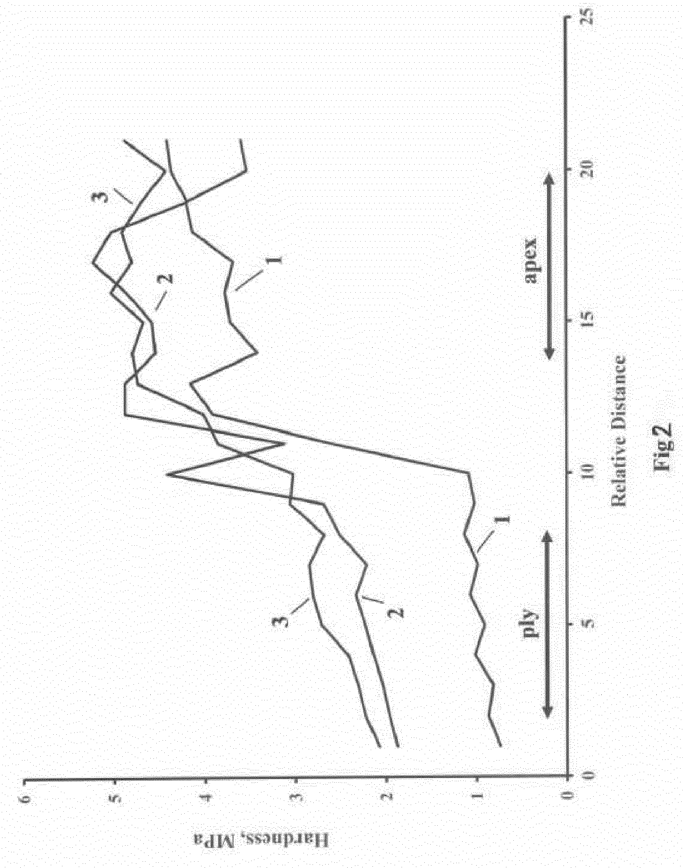

The composites were cured at 170°C for 6 minutes. The composites were then guillotine-cut across the layer interface then embedded in epoxy resin and fine polished. Testing was performed using the Nanolndenter G200 at room temperature, fitted with a Berkovich indenter (triangular cross-section geometry). Samples were indented to a depth of 15 µm and tested at a frequency of 45 Hz and low strain (∼0.1%). Indentations were tested across the layer interface at 150 µm intervals. Results of the hardness testing is shown in FIG. 2.

As seen in FIG. 2, the measured ply compound hardness in Samples 2 and 3 is significantly increased compared to Sample 1. This is attributed to migration of the methylene donor (HMMM or HMT) from the region of high concentration in the apex layer to low concentration in the ply layer, leading to increased hardness in the ply layer.

## Claims

1. A pneumatic tire comprising a carcass (114) and a tread (110) radially outward of the carcass, the carcass (114) comprising a carcass reinforcing ply (118), opposing bead portions (130a, 130b) and opposing sidewalls (120a, 120b), the carcass reinforcing ply (118) having a main portion (118a) extending between the opposing bead portions (130a, 130b) and a pair of turnup portions (118b), each turnup portion (118b) extending from one end of the main portion (118a), the carcass ply (118) further comprising reinforcing cords and a plycoat, each bead portion (130a, 130b) having a bead core (132) and a bead apex (134), each bead apex (134) being in contact with the plycoat, wherein the plycoat comprises a plycoat rubber composition comprising a first methylene acceptor, wherein the apex (1134) comprises an apex rubber composition comprising a second methylene acceptor and a methylene donor, and wherein the amount of methylene donor is in stoichiometric excess relative to the second methylene acceptor.

2. The pneumatic tire of claim 1 wherein the first methylene acceptor and the second methylene acceptor are identical compounds.

3. The pneumatic tire of claim 1 wherein the first methylene acceptor and the second methylene acceptor are different compounds.

4. The pneumatic tire of at least one of the previous claims wherein the amount of first methylene acceptor ranges from 0.5 to 10 phr or from 1 phr to 5 phr, the amount of second methylene acceptor ranges from 15 to 45 phr or from 15 to 25 phr, and the amount of methylene donor ranges from 5 to 15 phr or from 6 to 10 phr.

5. The pneumatic tire of at least one of the previous claims wherein the first and second methylene acceptors are selected from the group consisting of resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof.

6. The pneumatic tire of at least one of the previous claims wherein the methylene donor is selected from the group consisting of hexamethylenetetramine and N-substituted oxymethylmelamines, of the general formula: 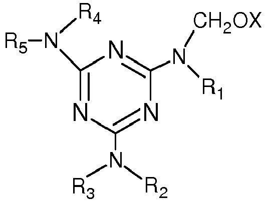 wherein X is hydrogen or an alkyl having from 1 to 8 carbon atoms, R₁, R₂, R₃, R₄ and R₅ are individually selected from the group consisting of hydrogen, an alkyl having from 1 to 8 carbon atoms, the group -CH₂OX or their condensation products.

7. The pneumatic tire of at least one of the previous claims wherein the methylene donor is selected from the group consisting of hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine.

8. The pneumatic tire of at least one of the previous claims wherein the plycoat rubber composition is a vulcanizable or vulcanized rubber composition and the bead apex rubber composition is a vulcanizable or vulcanized rubber composition.

9. A method of making a pneumatic tire comprising a carcass (114) and a tread (110) radially outward of the carcass, the carcass (114) comprising a carcass reinforcing ply (118), opposing bead portions (130a, 130b) and opposing sidewalls (120a, 120b), the carcass reinforcing ply (118) having a main portion (118a) extending between the opposing bead portions (130a, 130b) and a pair of turnup portions (118b), each turnup portion (118b) extending from one end of the main portion (118a), the carcass ply (118) further comprising reinforcing cords and a plycoat, each bead portion (130a, 130b) having a bead core (132) and a bead apex (134), each bead apex (134) being in contact with the plycoat, the method comprising the steps of:
fabricating the plycoat using a vulcanizable plycoat rubber composition comprising a first methylene acceptor;
fabricating the bead apex (134) using a vulcanizable apex rubber composition comprising a second methylene acceptor and a methylene donor, wherein the amount of methylene donor is used in stoichiometric excess relative to the second methylene acceptor.

10. The method of claim 9 wherein the first methylene acceptor and the second methylene acceptor are identical compounds.

11. The method of claim 9 or 10 wherein the amount of first methylene acceptor ranges from 0.5 to 10 phr, the amount of second methylene acceptor ranges from 15 to 45 phr, and the amount of methylene donor ranges from 5 to 15 phr.

12. The method of at least one of the claims 9 to 12 wherein the first and second methylene acceptors are selected from the group consisting of resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof.

13. The method of at least one of the claims 9 to 12 wherein the methylene donor is selected from the group consisting of hexamethylenetetramine and N-substituted oxymethylmelamines, of the general formula: 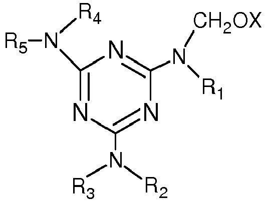 wherein X is hydrogen or an alkyl having from 1 to 8 carbon atoms, R₁, R₂, R₃, R₄ and R₅ are individually selected from the group consisting of hydrogen, an alkyl having from 1 to 8 carbon atoms, the group -CH₂OX or their condensation products.

14. The method of at least one of the claims 9 to 13 wherein the methylene donor is selected from the group consisting of hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine.

## Patentansprüche

1. Luftreifen, umfassend eine Karkasse (114) und eine Lauffläche (110) radial auswärts von der Karkasse, wobei die Karkasse (114) eine Karkassenverstärkungslage (118), einander gegenüberliegende Wulstbereiche (130a, 130b) und einander gegenüberliegende Seitenwände (120a, 120b) umfasst, wobei die Karkassenverstärkungslage (118) einen Hauptteil (118a), der sich zwischen den einander gegenüberliegenden Wulstbereichen (130a, 130b) erstreckt, und ein Paar Umschlagteile (118b) umfasst, wobei jeder Umschlagteil (118b) sich von einem Ende des Hauptteils (118a) erstreckt, wobei die Karkassenlage (118) weiter Verstärkungskorde und einen Lagenüberzug umfasst, wobei jeder Wulstbereich (130a, 130b) einen Wulstkern (132) und ein Wulstkernprofil (134) aufweist, wobei jedes Wulstkernprofil (134) mit dem Lagenüberzug in Kontakt ist, wobei der Lagenüberzug eine Lagenüberzug-Kautschukzusammensetzung umfasst, umfassend einen ersten Methylenakzeptor, wobei das Kernprofil (134) eine Kernprofil-Kautschukzusammensetzung umfasst, umfassend einen zweiten Methylenakzeptor und einen Methylendonator, und wobei die Menge an Methylendonator in Bezug auf den zweiten Methylenakzeptor in stöchiometrischem Überschuss vorliegt.

2. Luftreifen nach Anspruch 1, wobei der erste Methylenakzeptor und der zweite Methylenakzeptor identische Verbindungen sind.

3. Luftreifen nach Anspruch 1, wobei der erste Methylenakzeptor und der zweite Methylenakzeptor verschiedene Verbindungen sind.

4. Luftreifen nach mindestens einem der vorhergehenden Ansprüche, wobei die Menge an erstem Methylenakzeptor im Bereich von 0,5 bis 10 phr oder von 1 phr bis 5 phr liegt, die Menge an zweitem Methylenakzeptor im Bereich von 15 bis 45 phr oder von 15 bis 25 phr liegt und die Menge an Methylendonator im Bereich von 5 bis 15 phr oder von 6 bis 10 phr liegt.

5. Luftreifen nach mindestens einem der vorhergehenden Ansprüche, wobei der erste und der zweite Methylenakzeptor aus der Gruppe ausgewählt sind, bestehend aus Resorcinol, Resorcinolderivaten, Monohydroxyphenolen und deren Derivaten, Dihydroxyphenolen und deren Derivaten, Polyhydroxyphenolen und deren Derivaten, unmodifizierten Phenol-Novolakharzen, modifiziertem Phenol-Novolakharz, Resorcinol-Novolakharzen und Mischungen davon.

6. Luftreifen nach mindestens einem der vorhergehenden Ansprüche, wobei der Methylendonator aus der Gruppe ausgewählt ist, bestehend aus Hexamethylentetramin und N-substituierten Oxymethylmelaminen, mit der allgemeinen Formel: 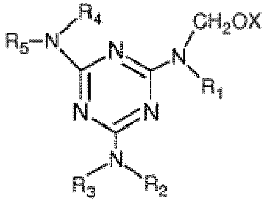 wobei X Wasserstoff oder ein Alkyl mit 1 bis 8 Kohlenstoffatomen ist, R₁, R₂, R₃, R₄ und R₅ individuell aus der Gruppe ausgewählt sind, bestehend aus Wasserstoff, einem Alkyl mit 1 bis 8 Kohlenstoffatomen, der Gruppe -CH₂OX oder deren Kondensationsprodukten.

7. Luftreifen nach mindestens einem der vorhergehenden Ansprüche, wobei der Methylendonator aus der Gruppe ausgewählt ist, bestehend aus hexakis-(Methoxymethyl)melamin, N,N',N"-Trimethyl/N,N',N"-Trimethylolmelamin, Hexamethylolmelamin, N,N',N"-Dimethylolmelamin, N-Methylolmelamin, N,N'-Dimethylolmelamin, N,N',N"-tris(Methoxymethyl)melamin, N,N',N"-Tributyl-N,N',N"-trimethylolmelamin, Hexamethoxymethylmelamin und Hexaethoxymethylmelamin.

8. Luftreifen nach mindestens einem der vorhergehenden Ansprüche, wobei die Lagenüberzug-Kautschukzusammensetzung eine vulkanisierbare oder vulkanisierte Kautschukzusammensetzung ist und die Wulstkernprofil-Kautschukzusammensetzung eine vulkanisierbare oder vulkanisierte Kautschukzusammensetzung ist.

9. Verfahren zur Herstellung eines Luftreifens, umfassend eine Karkasse (114) und eine Lauffläche (110) radial auswärts von der Karkasse, wobei die Karkasse (114) eine Karkassenverstärkungslage (118), einander gegenüberliegende Wulstbereiche (130a, 130b) und einander gegenüberliegende Seitenwände (120a, 120b) umfasst, wobei die Karkassenverstärkungslage (118) einen Hauptteil (118a), der sich zwischen den einander gegenüberliegenden Wulstbereichen (130a, 130b) erstreckt, und ein Paar Umschlagteile (118b) umfasst, wobei jeder Umschlagteil (118b) sich von einem Ende des Hauptteils (118a) erstreckt, wobei die Karkassenlage (118) weiter Verstärkungskorde und einen Lagenüberzug umfasst, wobei jeder Wulstbereich (130a, 130b) einen Wulstkern (132) und ein Wulstkernprofil (134) aufweist, wobei jedes Wulstkernprofil (134) mit dem Lagenüberzug in Kontakt ist, wobei das Verfahren die Schritte umfasst des:
Fertigens des Lagenüberzugs unter Verwendung einer vulkanisierbaren Lagenüberzug-Kautschukzusammensetzung, umfassend einen ersten Methylenakzeptor;
Fertigens des Kernprofils (134) unter Verwendung einer vulkanisierbaren eine Kernprofil-Kautschukzusammensetzung, umfassend einen zweiten Methylenakzeptor und einen Methylendonator, wobei die Menge an Methylendonator in Bezug auf den zweiten Methylenakzeptor in stöchiometrischem Überschuss verwendet wird.

10. Verfahren nach Anspruch 9, wobei der erste Methylenakzeptor und der zweite Methylenakzeptor identische Verbindungen sind.

11. Verfahren nach Anspruch 9 oder 10, wobei die Menge an erstem Methylenakzeptor im Bereich von 0,5 bis 10 phr liegt, die Menge an zweitem Methylenakzeptor im Bereich von 15 bis 45 phr liegt und die Menge an Methylendonator im Bereich von 5 bis 15 phr liegt.

12. Verfahren nach mindestens einem der Ansprüche 9 bis 11, wobei der erste und der zweite Methylenakzeptor aus der Gruppe ausgewählt sind, bestehend aus Resorcinol, Resorcinolderivaten, Monohydroxyphenolen und deren Derivaten, Dihydroxyphenolen und deren Derivaten, Polyhydroxyphenolen und deren Derivaten, unmodifizierten Phenol-Novolakharzen, modifiziertem Phenol-Novolakharz, Resorcinol-Novolakharzen und Mischungen davon.

13. Verfahren nach mindestens einem der Ansprüche 9 bis 12, wobei der Methylendonator aus der Gruppe ausgewählt ist, bestehend aus Hexamethylentetramin und N-substituierten Oxymethylmelaminen, mit der allgemeinen Formel: 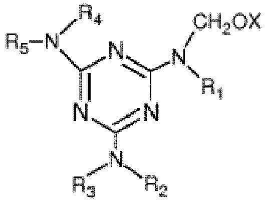 wobei X Wasserstoff oder ein Alkyl mit 1 bis 8 Kohlenstoffatomen ist, R₁, R₂, R₃, R₄ und R₅ individuell aus der Gruppe ausgewählt sind, bestehend aus Wasserstoff, einem Alkyl mit 1 bis 8 Kohlenstoffatomen, der Gruppe -CH₂OX oder deren Kondensationsprodukten.

14. Verfahren nach mindestens einem der Ansprüche 9 bis 13, wobei der Methylendonator aus der Gruppe ausgewählt ist, bestehend aus hexakis-(Methoxymethyl)melamin, N,N',N"-Trimethyl/N,N',N"-Trimethylolmelamin, Hexamethylolmelamin, N,N',N"-Dimethylolmelamin, N-Methylolmelamin, N,N'-Dimethylolmelamin, N,N',N"-tris(Methoxymethyl)melamin, N,N',N"-Tributyl-N,N',N"-trimethylolmelamin, Hexamethoxymethylmelamin und Hexaethoxymethylmelamin.

## Revendications

1. Bandage pneumatique comprenant une carcasse (114) et une bande de roulement (110) à l'extérieur de la carcasse en direction radiale, la carcasse (114) comprenant une nappe de renforcement de carcasse (118), des portions opposées (130a, 130b) faisant office de talons et des flancs opposés (120a, 120b), la nappe de renforcement de carcasse (118) possédant une portion principale (118a) s'étendant entre les portions opposées (130a, 130b) faisant office de talons et une paire de portions de retournement (118b), chaque portion de retournement (118b) s'étendant depuis une extrémité de la portion principale (118a), la nappe de carcasse (118) comprenant en outre des câblés de renforcement et un revêtement de nappe, chaque portion (130a, 130b) faisant office de talon possédant une tringle de talon (132) et un bourrage sur tringle (134), chaque bourrage sur tringle (134) entrant en contact avec le revêtement de nappe, dans lequel le revêtement de nappe comprend une composition de caoutchouc de revêtement de nappe comprenant un premier accepteur de groupes méthylène, le bourrage sur tringle (134) comprenant une composition de caoutchouc de bourrage sur tringle comprenant un second accepteur de groupes méthylène et un donneur de groupes méthylène, et la quantité du donneur de groupes méthylène représentant un excès stoechiométrique par rapport au second accepteur de groupes méthylène.

2. Bandage pneumatique selon la revendication 1, dans lequel le premier accepteur de groupes méthylène et le second accepteur de groupes méthylène sont des composés identiques.

3. Bandage pneumatique selon la revendication 1, dans lequel le premier accepteur de groupes méthylène et le second accepteur de groupes méthylène sont des composés différents.

4. Bandage pneumatique selon au moins une des revendications précédentes, dans lequel la quantité du premier accepteur de groupes méthylène se situe dans la plage de 0,5 à 10 phr ou de 1 phr à 5 phr, la quantité du second accepteur de groupes méthylène se situe dans la plage de 15 à 45 phr ou de 15 phr à 25 phr, et la quantité du donneur de groupes méthylène se situe dans la plage de 5 à 15 phr ou de 6 à 10 phr.

5. Bandage pneumatique selon au moins une des revendications précédentes, dans lequel le premier et le second accepteur de groupes méthylène sont choisis parmi le groupe constitué par le résorcinol, des dérivés du résorcinol, des phénols monovalents et leurs dérivés, des phénols divalents et leurs dérivés, des phénols polyvalents et leurs dérivés, des résines de phénol novolaque non modifiées, des résines de phénol novolaque modifiées, des résines de résorcinol novolaque, ainsi que leurs mélanges.

6. Bandage pneumatique selon au moins une des revendications précédentes, dans lequel le donneur de groupes méthylène est choisi parmi le groupe constitué par l'hexaméthylènetétramine et des oxyméthylmélamines substituées sur l'atome d'azote, répondant à la formule générale : 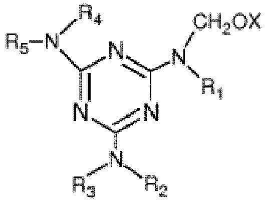 dans laquelle X représente un atome d'hydrogène ou un groupe alkyle contenant de 1 à 8 atomes de carbone, R₁, R₂, R₃, R₄ et R₅ sont choisis de manière individuelle parmi le groupe constitué par un atome d'hydrogène, un groupe alkyle contenant de 1 à 8 atomes de carbone, le groupe -CH₂OX ou leurs produits de condensation.

7. Bandage pneumatique selon au moins une des revendications précédentes, dans lequel le donneur de groupes méthylène est choisi parmi le groupe constitué par l'hexakis-(méthoxyméthyl)-mélamine, la N,N',N"-triméthyl/N,N',N"-triméthylolmélamine, l'hexaméthylolmélamine, la N,N',N"-diméthylolmélamine, la méthylolmélamine, la N,N'-diméthylolmélamine, la N,N',N"-tris-(méthoxyméthyl)mélamine, la N,N',N"-tributyl-N,N',N"-triméthylol-mélamine, l'hexaméthoxyméthylmélamine, et l'hexaéthoxyméthyl-mélamine.

8. Bandage pneumatique selon au moins une des revendications précédentes, dans lequel la composition du caoutchouc du revêtement de nappe est une composition de caoutchouc vulcanisable ou vulcanisé et la composition de caoutchouc du bourrage sur tringle est une composition de caoutchouc vulcanisable ou vulcanisé.

9. Procédé de confection d'un bandage pneumatique comprenant une carcasse (114) et une bande de roulement (110) à l'extérieur de la carcasse en direction radiale, la carcasse (114) comprenant une nappe de renforcement de carcasse (118), des portions opposées (130a, 130b) faisant office de talons et des flancs opposés (120a, 120b), la nappe de renforcement de carcasse (118) possédant une portion principale (118a) s'étendant entre les portions opposées (130a, 130b) faisant office de talons et une paire de portions de retournement (118b), chaque portion de retournement (118b) s'étendant depuis une extrémité de la portion principale (118a), la nappe de carcasse (118) comprenant en outre des câblés de renforcement et un revêtement de nappe, chaque portion (130a, 130b) faisant office de talon possédant une tringle de talon (132) et un bourrage sur tringle (134), chaque bourrage sur tringle (134) entrant en contact avec le revêtement de nappe, le procédé comprenant les étapes consistant à :
fabriquer le revêtement de nappe en utilisant une composition de caoutchouc vulcanisable de revêtement de nappe comprenant un premier accepteur de groupes méthylène ;
fabriquer le bourrage sur tringle (134) en utilisant une composition de caoutchouc vulcanisable de bourrage sur tringle comprenant un second accepteur de groupes méthylène et un donneur de groupes méthylène, la quantité du donneur de groupes méthylène représentant un excès stoechiométrique par rapport au second accepteur de groupes méthylène.

10. Procédé selon la revendication 9, dans lequel le premier accepteur de groupes méthylène et le second accepteur de groupes méthylène sont des composés identiques.

11. Procédé selon la revendication 9 ou 10, dans lequel la quantité du premier accepteur de groupes méthylène se situe dans la plage de 0,5 à 10 phr, la quantité du second accepteur de groupes méthylène se situe dans la plage de 15 à 45 phr, et la quantité du donneur de groupes méthylène se situe dans la plage de 5 à 15 phr.

12. Procédé selon au moins une des revendications 9 à 12, dans lequel le premier et le second accepteur de groupes méthylène sont choisis parmi le groupe constitué par le résorcinol, des dérivés du résorcinol, des phénols monovalents et leurs dérivés, des phénols divalents et leurs dérivés, des phénols polyvalents et leurs dérivés, des résines de phénol novolaque non modifiées, des résines de phénol novolaque modifiées, des résines de résorcinol novolaque, ainsi que leurs mélanges.

13. Procédé selon au moins une des revendications 9 à 12, dans lequel le donneur de groupes méthylène est choisi parmi le groupe constitué par l'hexaméthylènetétramine et des oxyméthylmélamines substituées sur l'atome d'azote, répondant à la formule générale : 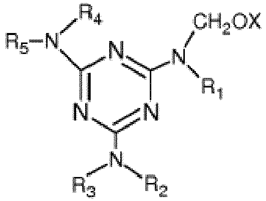 dans laquelle X représente un atome d'hydrogène ou un groupe alkyle contenant de 1 à 8 atomes de carbone, R₁, R₂, R₃, R₄ et R₅ sont choisis de manière individuelle parmi le groupe constitué par un atome d'hydrogène, un groupe alkyle contenant de 1 à 8 atomes de carbone, le groupe -CH₂OX ou leurs produits de condensation.

14. Procédé selon au moins une des revendications 9 à 13, dans lequel le donneur de groupes méthylène est choisi parmi le groupe constitué par l'hexakis-(méthoxyméthyl)-mélamine, la N,N',N"-triméthyl/N,N',N"-triméthylolmélamine, l'hexaméthylolmélamine, la N,N',N"-diméthylolmélamine, la méthylolmélamine, la N,N'-diméthylolmélamine, la N,N',N"-tris-(méthoxyméthyl)mélamine, la N,N',N"-tributyl-N,N',N"-triméthylol-mélamine, l'hexaméthoxyméthylmélamine, et l'hexaéthoxyméthyl-mélamine.
